# EUROPEAN PATENT APPLICATION

(11) **EP 0 625 855 A1**
(43) Date of publication of application: **23.11.1994**
(21) Application number: 93870083.8
(22) Date of filing: 19.05.1993
(51) Int. Cl.: H04N 7/173, H04L 12/56

(54) **Network for providing switched video services**

(71) Applicant: ALCATEL BELL Naamloze Vennootschap, B-2018 Antwerpen 1 (BE); ALCATEL N.V., NL-2288 BH Rijswijk (NL)
(72) Inventor: Pauwels, Bart Joseph Gerard, B-2140 Borgerhout (BE); Verhille, Henri Albert Julia, B-2960 Brecht (BE)

(57) **Abstract**

The network provides switched video services by transmitting video packets or copies thereof, which are part of a video signal, to user stations US1/US5 connected to the network, in response to received control signals issued by said user stations. It includes a plurality of intercoupled switching modules SM1/SM3 to realize said transmission, and control circuits CC1/CC3 and copy modules CM1/CM3 associated to distinct ones of these switching modules, to handle the control signals and make the copies respectively. The switching modules are multipath self routing switching modules which are able to convey through the network the video packets/packet copies and control signals. They are intercoupled by groups of links and are each able, when operated by an associated control circuit to convey the video packets/packet copies of a video signal to any one of the links of a predetermined group which is chosen based on address related information concerning the destination of a video signal of which the handled packets form part and which is contained in the control signal related to this video signal. At least one of the copy modules includes a plurality of copy circuits each of which is able to make at least part of the requested copies.

## Description

The present invention relates to a network for providing switched video services by transmitting video packets or copies of said packets, which are part of a video signal, to user stations connected to said network, in response to received control signals issued by said user stations, said network including a plurality of intercoupled switching modules to realize said transmission, and control circuits and copy modules associated to distinct ones of said switching modules, to handle said control signals and make said copies respectively.

Such a video on demand network is already known in the art, e.g. from the article "Hierarchical Distribution of Video with Dynamic Port Allocation" by Tak-Shing et al, IEEE Transactions on Communications, Vol. 39, No. 8, August 1991, pp. 1268 to 1274. In this network however,no features are foreseen to make it reliable. Moreover the traffic load which can be handled by the links of this known network is restricted.

An object of the present invention is to provide a video on demand network of the above known type but which is realized in such a way that it is more reliable and can handle a higher load of the links than the above known network.

According to the invention, this object is achieved due to the fact that said switching modules are multipath self routing switching modules which are able to convey through said network said video packets/packet copies and control signals, that said switching modules are intercoupled by groups of links and are each able, when operated by a said associated control circuit, to convey for a said video signal the video packets/packet copies thereof to any one of said links of a predetermined group which is chosen based on address related information concerning the destination of said video signal and contained in a said control signal related to said video signal and that at least one of said copy modules associated to a said switching module includes a plurality of copy circuits each of which is able to make at least part of said copies when operated by a said control circuit associated to said switching module.

Indeed, due to the inherent switch redundancy of the multipath self routing modules, to the multiplication of the copy circuit which are each able to make packet copies, and to the link redundancy of the links in the link groups, the network is a reliable network with relatively high availability of transmission resources and it can handle a higher load of the links than the known network thanks to the use of the link groups.

Another characteristic feature of the invention is that each one of said switching modules, under control of a said associated control circuit, routes said video packets/packet copies to at least one of its associated copy circuits based on the workload of said circuits and that each of said control circuits performs said control by means of routing information it incorporates in said packets.

Copying can thus be realized on a per packet basis since all information about the number of copies to be made and about the link group destination is contained in the video packet/packet copy itself, such that any of the copy circuits can handle any video packet/packet copy of any video signal without any connection setup activity in the copy modules.

To be noted that the number of copies to be made has not explicitely to be part of the packets, since it can be derived from the incorporated routing information. Indeed, this information relates to the routes to be followed by the video packet and by all copies thereof, and thus the number of copies can be derived from the number of routes.

As a result of the above features, the new network is reliable, flexible and non-blocking.

Still another characteristic feature of the invention is that the network is an Asynchronous Transfer Mode network.

The multiple components of the video signal can thus be transmitted at various bit rates which may be variable or fixed.

Another characterisitc feature of the invention is that each of said video packets/packet copies contains first identity information concerning the identity of the video signal of which it forms part, that each of said control signals additionally contains second identity information concerning the identity of the video signal whose transmission is thus requested by said user station, that each of said control circuits, for each video signal whose video packets/packet copies are processed by this control circuit, stores in a dedicated table an identifier indicative of the identity of that video signal and routing information concerning the routes to be followed by said video packets/packet copies, and that each of said control circuits is able to adapt said dedicated table according to the information contained in the control signals processed by this control circuit.

The control circuits can thus control the switching modules by means of the routing information included in the dedicated tables, as well as the copy modules, with the help of the number values derived from said routing information. How this control is realized will be explained in detail later.

To be noted that said number values can also explicitely be stored in the dedicated tables. In this way, the above derivation can be avoided.

Still another characteristic feature of the invention is that each of said switching modules which is associated with a control circuit, under control of this control circuit, routes each of said video packets/packet copies processed by this control module, to a said copy module also associated with said switching module when said dedicated table included in said control circuit indicates that copies have to be made of said video packets/packet copies, whilst said switching modules, under control of said associated control circuit, routes said video packets/packet copies to a predetermined one of said link groups when no copies have to be made, said link group being determined by said routing information included in said dedicated table for the video signal of which these packets are part and that each of said switching modules which is associated with a copy module, under control of the control circuit also associated with said switching module routes each of said packet copies made by this copy module to a predetermined one of said link groups also based on said routing information.

The above mentioned tables are built up thanks to the fact that a said control circuit upon receipt of a said control signal indicating that a new video signal is requested by a said user station derives said identifier from the second identity information contained in said control signal, stores said identifier in its dedicated table together with the routing information derived from the address related information also contained in said control signal and passes said control signal to a preceding switching module when said identifier is not yet present in said table and that a said control circuit upon receipt of a said control signal indicating that a said video signal is no longer requested by a said user station derives said identifier from the second identity information contained in said control signal and deletes the routing information derived from the address related information also contained in said control signal and related to said identifier from said dedicated table, that said control circuit then deletes all information related to said identifier and said identifier from said dedicated table and passes said control signal to a preceding switching module when the video packets/packet copies of the video signal related to said identifier have no longer to be processed by this control circuit.

Yet another characteristic feature of the invention is that at least one of said control circuits includes a plurality of control subcircuits each of which is able to handle said packets and to adapt a such dedicated table.

This makes the network even more flexible and reliable.

Still another characteristic feature of the invention is that said switching modules are intercoupled via respective ones of said associated control circuits, at least one of said switching modules being coupled to at least part of said user stations via respective access modules and at least one of said switching modules being coupled via a respective one of said control circuits to a respective server module providing said video packets.

This configuration makes sure that the video packets are generated, copied, and transmitted to the requesting user station.

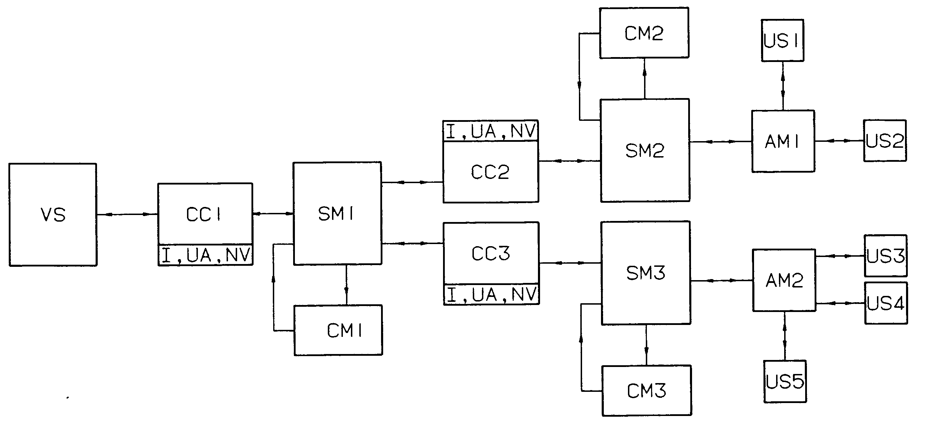

The above mentioned and other objects and features of the invention will become more apparent and the invention itself will be best understood by referring to the following description of an embodiment taken in conjunction with the accompanying drawing which represents a network according to the invention.

This network is a video on demand network which includes a video server module VS coupled to a multipath self routing switching module SM1 via a control circuit CC1. SM1 is itself coupled to two multipath self routing switching modules SM2 and SM3 via respective control circuits CC2 and CC3, whilst SM2 and SM3 are connected to respective access modules AM1 and AM2 to which users stations US1 and US2, and US3 to US4 are connected respectively. An output of each of the switching modules SM1 to SM3 is connected to an input of respective copy modules CM1 to CM3 having an output which is connected to an input of its respective switching module. The interconnections between the switching modules and the control circuits and the access modules are constituted by multilink connections each comprising a group of links. An information packet applied to such a multilink can be transmitted over any link of the group. More details about the multilink principle are for instance given in the published European Patent Application 90200593.3 with publication number 0446492 A1 (Henrion 20)

The video server module VS is able to generate video packets which belong to distinct video signals e.g. constituted by instances of video programs. The latter program may be requested by any one of the user stations US1 to US5 by means of a control signal and that user station may have a random access capability in that video program , i.e. the user station can request to go backwards or forwards in the video program within a predetermined granularity, to stop the program or to zap to another program. This however implies the addressing of another program instance.

Each control signal includes an identifier of the video signal to which it is related and routing information related to the destination of that video signal, whilst each video packet includes an identifier of the video signal to which it belongs.

To be noted that control signals received by CC2 and CC3 contain routing information related to the address of the user station US1/US5 which issued the control signal, whilst control signals received by CC1 include routing information related to the address of the following control circuit CC2 or CC3 via which the control signal was received. CC2 and CC3 indeed replace in the control signals they receive the routing information contained therein by routing information related to their own address.

A video server module such as VS, and multipath self routing modules such as SM1 to SM3 are described in the article "System architecture for a large scale video on demand service" by W.D. Sincoskie, Computer Networks and ISDN Systems, No 22 (1991), pp 155-162, paragraph 4.1 and in the published European Patent Applications 89908984.1 (Henrion 18) and 90200594.1 (Henrion 19) respectively. These modules are therefore not described in more detail.

The copy modules CM1 to CM3 are able to make copies of the packets they receive and to transmit these copies to the switching module they belong to. These packets can be video packets or copies thereof. The modules include a plurality of copy circuits each of which can make at least part of the copies. The number of circuits is chosen in such a way that it is always possible to make the needed copies upon arrival of the packets, i.e. the copies can be made on the fly.

The control circuits CC1 to CC3 handle the control signals issued by the user stations and the video packets received either from VS or from a preceding switching module.

Each control circuit CC1/CC3 is able to extract the above video signal identifier and the routing information from a received control signal, and the video signal identifier from a received packet. It uses the information retrieved from the control signals to adapt a dedicated table included in this control circuit and shown in the figure by means of the information it contains, i.e. for each video signal handled by the control circuit its identifier I together with at least one user address UA, which, as mentioned earlier, is routing information related to the address of a user station or of a following control circuit and with a number value NV.

To be noted that the above routing information can be a destination address and that, as explained earlier, the number value can be derived from the stored routing information or destination addresses and has not to be stored explicitely.

Each of the control circuits uses its dedicated table to control the switching module to which it is connected to route a received packet either to the copy module connected to this switching module or to a predetermined group link, to indicate to the copy module how many copies have to be made and to control the switching module to route these copies to a predetermined group link. To this aim, the control circuits incorporate in the packets routing information and information concerning the number of copies to be made, so that the associated switching module and copy module can perform the above routing and copying respectively. Again it is not necessary to explicitely include the number value in the packets, but it makes the processing by the copy modules easier.

How the above table is adapted and used is explained in detail hereafter.

Since it is obvious for a person skilled in the art to realize control circuits such as CC1 to CC3 from their functional description, these circuits are not described in detail. Neither are AM1; AM2 and US1 to US5 described in detail because they are well known in the art. The access modules AM1 and AM2 are for instance Asymetric Digital Subscriber Lines (ADSL) or coax cables, both with an associated central office for realizing the access control to these lines or cables, or an Asynchronous Transfer Mode (ATM) Passive Optical Network (APON) as described in the European Patent Application 91870197.0 (Van Der Plas 4).

The working of the above video on demand network is hereafter described by means of the following scenario : a first control signal is issued by US1 to request for the transmission of a new video signal, then US2 and successively US3 ask for the same video signal and finally US3 zaps to a video signal which is already being received by US4.

When the control signal, issued by US1 to request for transmission a video signal which is not being transmitted yet, reaches the control circuit CC2 via AM1 and SM2, the latter control circuit extracts from the control signal the identifier of the requested video signal and the address of US1. Since this video signal is not being transmitted yet, CC2 has no input concerning this identifier in its dedicated table and the identifier is therefore stored in this table together with the address of US1 and a number value related to the stored identifier is initialized to zero. CC2 replaces the routing information in the control signal by routing information related to its own address and via SM1 passes that control signal to CC1 which stores the information included therein in its table and passes the control signal to VS after again having adapted the routing information therein.

To be noted that the configuration of the network is at start-up communicated to all control circuits, so that each control circuit knows the address of the preceding one.

Upon receipt of the control signal from CC1, VS generates a first video packet of the video signal whose transmission is requested by US1 and passes it to CC1. When this packet is received by CC1 the latter checks if the video identifier included in the video packet is already stored in its dedicated table. Since this is the case, the corresponding user address, i.e. the address of CC2 and the number value 0 are retrieved from the table. The latter value indicates that no copies have to be made and as a result and by inclusion of appropriate routing information in the video packet CC1 controls SM1 in such a way that this packet is routed to a link group connected with CC2. In CC2 and in the same way, the video packet is routed to AM1 from where it is transmitted to US1.

To be noted that in the described embodiment the switching modules are interconnected via the respective control circuits. However the described scenario is equally well applicable to a configuration where the control circuits are connected to their associated switching module in the same way as the control modules are. In that case, the packets would have to be transmitted from VS to CC1 via SM1 and from CC1 to CC2 via SM1 and SM2.

When, in our scenario, US2 issues a control signal to request for transmission of the same video signal as requested by US1, CC2 stores the address of US2, detects that the video signal identifier included in that control signal is already stored in its table and increments with one the number value stored therein. The control signal is not passed to CC1. A video packet of the requested video signal generated later on by VS is again by CC1 passed directly to CC2 via SM1. CC2 however detects that a copy has to be made of the packet, since the number value stored for the video signal identifier included in the packet equals 1, and inserts in the packet information related to that number value and routing information on the one end to route the packet to CM2 over SM2 and on the other hand to indicate the destination of the packets. One of the available copy circuits of CM2 makes a copy of the packet, includes routing information derived from the received routing information therein, and passes both the video packet and the packet copy to SM2. According to this routing information SM2 then routes one of the packets to US1 and another to US2 via SM2 and AM1.

Upon receipt of a control signal from US3, to again request the same video signal, and supposing neither US4 nor US5 has already requested for transmission of this video signal, CC3 in the same way as CC2, when receiving a first request from US1, initialises an entry in its table and passes the control signal to CC1 via SM1. CC1 increments the number value it already stores for this video signal identifier with 1 and stores the address of US3. When a next video packet of the latter video signal is transmitted by VS, CC1 controls SM1 first to route this packet to CM1 to make one copy thereof and afterwards to route one of the thus obtained packets received from CM1 to CC2 and the other one to CC3. This control is realized by CC1 by inserting adequate routing information in the video packet, according to the adresses stored in its table. In the same way CC2 makes sure that one copy is made of the packet it receives and that the obtained packets are via SM2 and AM1 sent, one to US1 and one to US2. CC3 routes its packet immediately to AM2 via SM3 because the counter value related to the included video signal identifier equals 0 and AM2 passes the packet to US3.

When US3 zaps to another video signal already received by US4, this means that it no longer wishes to receive the video signal it was receiving up to now. Consequently the number value associated with the video signal identifier of this video signal in the table of CC3 is decremented with 1. Since this value was already equal to 0, this means that packets including this identifier have no longer to be handled by CC3. Consequently all information related to this identifier are deleted from its list and a new control signal indicating that CC3 no longer wishes to receive this video signal is passed to CC1. First however, CC3 increments the number value stored in the table which is associated with the new requested video signal, i.e. the signal already requested by US4, meaning that there is already an entry in the table for this identifier, and stores the address of US3 for this entry. When CC1 receives the mentioned new control signal from US3, it decrements in its table the number value associated with the video signal identifier included in this new signal and deletes the related address of US3. Since the number value then becomes 0 copies have no longer to be made, but packets of the latter signal have still to be transmitted, namely to CC2 which has to make a copy thereof so that a packet can be sent to US1 and one to US2. A packet sent to US4 on the other hand is from then on in CM3 under control of CC3 copied to be transmitted also to US3.

If it is supposed that the new signal requested by US3 has not already been requested by US4 or US5, then, an entry has to be initialized for the new related video signal identifier in the table of CC3, whilst a new control signal has to be transmitted to CC1, for initialization of a similar entry in its table, and a signal has to be passed from CC1 to VS for generation of video packets of this new video signal.

To be noted that, in order to increase the reliability and flexibility of the network, and in the same way as the copy modules, the control circuits could be realized as a set of identical subcircuits each able to perform the functions of the above described control circuits. They could work in an active-standby mode, or could all be active, so that the working load of the control circuit could be distributed over the subcircuits. This obviously implies that they either have to use the same dedicated table or that a means has to be foreseen to make the tables consistent when each subcircuits uses its own table. Consistency of the tables could for instance be realized by broadcasting information concerning the update of a table to all related subcircuits.

To be also noted that the copy modules could be implemented as part of the switching module thereby using the functionality of this switching module. How this can be realized is described in the earlier mention published European Patent Application 89908984.1 (Henrion 18).

While the principles of the invention have been described above in connection with specific apparatus, it is to be clearly understood that this description is made only by way of example and not as a limitation on the scope of the invention. The above description of the working of the video on demand network of the figure can indeed in a similar way be applied to other, more complex configurations of the network and to other types of control signals.

## Claims

1. Network for providing switched video services by transmitting video packets or copies of said packets, which are part of a video signal, to user stations (US1, ..., US5) connected to said network, in response to received control signals issued by said user stations, said network including a plurality of intercoupled switching modules (SM1, ..., SM3) to realize said transmission, and control circuits (CC1, ..., CC3) and copy modules (CM1, .., CM3) associated to distinct ones of said switching modules, to handle said control signals and make said copies respectively, characterized in that said switching modules are multipath self routing switching modules which are able to convey through said network said video packets/packet copies and control signals, that said switching modules (SM1, ..., SM3) are intercoupled by groups of links and are each able, when operated by a said associated control circuit (CC1, ..., CC3), to convey for a said video signal the video packets/packet copies thereof to any one of said links of a predetermined group which is chosen based on address related information concerning the destination of said video signal and contained in a said control signal related to said video signal and that at least one of said copy modules (CM1, ..., CM3) associated to a said switching module (SM1, ..., SM3) includes a plurality of copy circuits each of which is able to make at least part of said copies when operated by a said control circuit associated to said switching module.

2. Video on demand network according to claim 1, characterized in that each one of said switching modules (SM1, ..., SM3), under control of a said associated control circuit (CC1, ..., CC3), routes said video packets/packet copies to at least one of its associated copy circuits (CM1, ..., CM3) based on the workload of said circuits.

3. Network according to claim 1, characterized in that each of said video packets/packet copies contains first identity information concerning the identity of the video signal of which it forms part, that each of said control signals additionally contains second identity information concerning the identity of the video signal whose transmission is thus requested by said user station, that each of said control circuits (CC1, ..., CC3), for each video signal whose video packets/packet copies are processed by this control circuit, stores in a dedicated table an identifier (I) indicative of the identity of that video signal and routing information (UA) concerning the routes to be followed by said video packets/packet copies, and that each of said control circuits is able to adapt said dedicated table according to the information contained in the control signals processed by this control circuit.

4. Network according to claim 3, characterized in that each of said switching modules (SM1, ..., SM3) which is associated with a control circuit CC1, ..., CC3), under control of this control circuit, routes each of said video packets/packet copies processed by this control module, to a said copy module (CM1, ..., CM3) also associated with said switching module when said dedicated table included in said control circuit indicates that copies have to be made of said video packets/packet copies, whilst said switching modules, under control of said associated control circuit, routes said video packets/packet copies to a predetermined one of said link groups when no copies have to be made, said link group being determined by said routing information (UA) included in said dedicated table for the video signal of which these packets are part.

5. Network according to claim 4, characterized in that each of said switching modules (SM1, ..., SM3) which is associated with a said copy module (CM1, ..., CM3), under control of the control circuit (CC1, ..., CC3) also associated with said switching module routes each of said packet copies made by this copy module to a predetermined one of said link groups also based on said routing information (UA).

6. Network according to claim 5, characterized in that said switching modules are via said groups of links coupled to a following one of said switching modules or to at least one of said user stations.

7. Network according to claim 1, characterized in that said switching modules (SM1, ..., SM3) are intercoupled via respective ones of said associated control circuits (CC1, ..., CC3), at least one of said switching modules (SM2, SM3) being coupled to at least part of said user stations (US1, ..., US5) via respective access modules (AM1, AM2) and at least one of said switching modules being coupled via a respective one of said control circuits (CC1) to a respective server module (VS) providing said video packets.

8. Network according to claim 6, characterized in that a said control circuit (CC1, ..., CC3) upon receipt of a said control signal indicating that a new video signal is requested by a said user station derives said identifier (I) from the second identity information contained in said control signal, stores said identifier in its dedicated table together with the routing information (UA) derived from the address related information also contained in said control signal and passes said control signal to a preceding switching module when said identifier is not yet present in said table.

9. Video on demand network according to claim 6, characterized in that a said control circuit (CC1, ..., CC3) upon receipt of a said control signal indicating that a said video signal is no longer requested by a said user station derives said identifier (I) from the second identity information contained in said control signal and deletes the routing information (UA) derived from the address related information also contained in said control signal and related to said identifier from said dedicated table, that said control circuit then deletes all information related to said identifier and said identifier from said dedicated table and passes said control signal to a preceding switching module when the video packets/packet copies of the video signal related to said identifier have no longer to be processed by this control circuit.

10. Video on demand network according to claims 2, 4 and 5, characterized in that each of said control circuits (CC1, ..., CC3) performs said control by means of routing information it incorporates in said packets.

11. Video on demand network according to claims 1 and 3 characterized in that at least one of said control circuits (CC1, ..., CC3) includes a plurality of control subcircuits each of which is able to handle said packets and to adapt a such dedicated table.

12. Video on demand network according to claim 11, characterized in that a such dedicated table is associated to each of said subcircuits and that information concerning the update of the dedicated table of any one of said control subcircuits of a said control circuit is broadcasted to the other subcircuits thereof via their associated switching module.

13. Video on demand network according to claim 1, characterized in that said copy modules (CM1, ..., CM3) are part of the switching modules (SM1, ..., SM3) they are associated with.

14. Video on demand network according to claim 5, characterized in that the number of copies to be made of a packet is derived from the routing information stored for the video signal of which this packet is part.

15. Video on demand network according to any of the previous claims characterized in that the network is an Asynchronous Transfer Mode network.
